# EUROPEAN PATENT SPECIFICATION

(11) **EP 0 394 003 B1**
(45) Date of publication and mention of the grant of the patent: **23.08.1995**
(21) Application number: 90304128.3
(22) Date of filing: 18.04.1990
(51) Int. Cl.: H04N 5/14

(54) **CRT beam control circuit**
Schaltung zur Steuerung des Strahles einer Kathodenstrahlröhre
Circuit de commande de faisceau d'un tube CRT

(30) Priority: 20.04.1989 US 340652
(43) Date of publication of application: 24.10.1990
(73) Proprietor: THOMSON CONSUMER ELECTRONICS, INC., Indianapolis Indiana 46206 (US)
(72) Inventor: Sendelweck, Gene Karl, Indianapolis, Indiana 46250 (US)
(74) Representative: Pratt, Richard Wilson

(56) References cited:
- US-A- 3 980 822
- US-A- 4 689 668

## Description

This invention relates generally to the field of circuits for controlling the beam currents conducted in cathode ray tubes in television receivers, with important use for preventing warping or blistering of the shadow mask used in conjunction with cathode ray tubes for color television receivers, due to heating from localized and intense peak beam currents.

Excessive beam currents in the cathode ray tube in a television receiver can result in a degraded image. Such excess beam currents can adversely affect the performance of the receiver deflection system for the cathode ray tube, can cause electron beam spot defocusing and can cause picture blooming. High beam currents which exceed the safe operating capacity of the cathode ray tube can result in damage to the cathode ray tube itself, as well as to other circuits or components in the receiver.

Many circuits are known for controlling average beam currents, by monitoring a signal representative of the magnitude of the cathode ray tube beam current derived from the cathode ray tube high voltage resupply system of the receiver. In one such arrangement, as described in US-A- 4,167,025-Willis, a beam current limiter responds to the current resupply derived signal when the signal exceeds a threshold level.

A cathode ray tube for a color receiver has a tendency to shift color purity in any area where there is localized heating of the shadow mask, for example where there is a relatively large white area. This condition is often referred to as blistering. The condition is usually worse on larger tubes, for example those having larger screen sizes, such as 27 inch or 31 inch diagonal measurements. Monitoring average beam current is generally inadequate to detect and prevent localized peaks of beam current, which are those responsible for localized shadow mask heating. The accepted method for preventing blistering is to reduce the level of video drive so that beam current in the white area is not high enough to cause discoloration. However, larger television screens are often also darker. Limiting the beam current in this fashion may make the displayed picture unnecessarily dim, especially for small white areas.

In order to cope with the problems of peak beam currents, not reflected in values of average beam current, other beam limiter circuits have been developed. In US-A- 4,599,643-Harlan, excessive beam currents are limited by means which operate independently of the cathode ray tube current resupply system. Instead, a combined signal representative of the combined instantaneous magnitudes of plural color signals is utilized. Beam current is limited, for example by reducing contrast, if the combined signal exceeds a threshold. Another beam limiter operating responsive to a combined color video signal is disclosed in US-A- 4,689,668 - Sutherland, II, et al. The control circuit includes, in the following order, a first low pass filter, a first peak detector, a second low pass filter, and a second peak detector. The second peak detector develops a control signal for limiting the amplitude of the video signal. The second low pass filter has a time constant of about 5V, where V is the period of a vertical field. This is substantially greater than the time constant of the first peak detector, which is about .05H, where H is the period of one horizontal scanning line.. In practice, the circuit will respond to beam currents conducted by white areas as small as approximately a full screen height vertical bar pattern having a width of about 10% of the screen. Wider patterns of lower height will also result in control of beam current by the circuit. In either case, persistance of the condition must continue for successive vertical fields in order for the respective thresholds to be surpassed and beam current limited.

Although the foregoing circuits have proved effective for preventing blistering in the shadow masks of the cathode ray tubes in conjunction with which they were developed, these circuits have not proved entirely satisfactory for use with the larger darker screens now more commonly available. The foregoing circuits have also shown a certain lack of responsiveness to lower level peak beam current conditions. These circuits are intended for use with receivers which are used not only with television program material, but computer displays and video games as well. Computer displays and video games are more likely to generate the geometrical patterns responsible for more serious shadow mask blistering and warping.

It is an object of the invention to provide an anti-blister circuit which is capable of preventing localized shadow mask heating during the display of white areas, for example blocks, which are smaller than 10% of the horizontal width.

The object is achieved by an apparatus according to claim 1. In accordance with an aspect of the invention, an anti-blister circuit is more sensitive, by responding to peak beam current conditions for each horizontal scanning line and by monitoring a signal related to luminance of the video signal.

An anti-blister circuit in accordance with this aspect of the invention comprises first means for detecting amplitude excursions of a signal with luminance information beyond a white level threshold during each horizontal scan. This enables the circuit to be responsive to excursions occurring during each horizontal scanning line. Second means, responsive to the first means, is provided for developing a first control signal related to a minimum duration of each amplitude excursion of the signal beyond the threshold. This enables the circuit to avoid controlling beam current, for example by reducing contrast, responsive to signal peaks which are too short to cause blistering or warping. Finally, third means responsive to the first control signal is provided for developing a second control signal to reduce beam current, for example by reducing contrast, during each minimum duration amplitude excursion; and, to permit the beam current to increase after termination of the amplitude excursion, until the next minimum duration excursion.

The foregoing and other aspects of the invention may be appreciated from the following detailed description of the presently preferred embodiments of the invention, and the accompanying drawings, wherein:
FIGURE 1 is a schematic diagram of a video control circuit incorporating an anti-blister circuit according to this invention; and,
FIGURES 2(a), 2(b) and 2(c) are graphs illustrating operation of the anti-blister circuit shown in FIGURE 1.

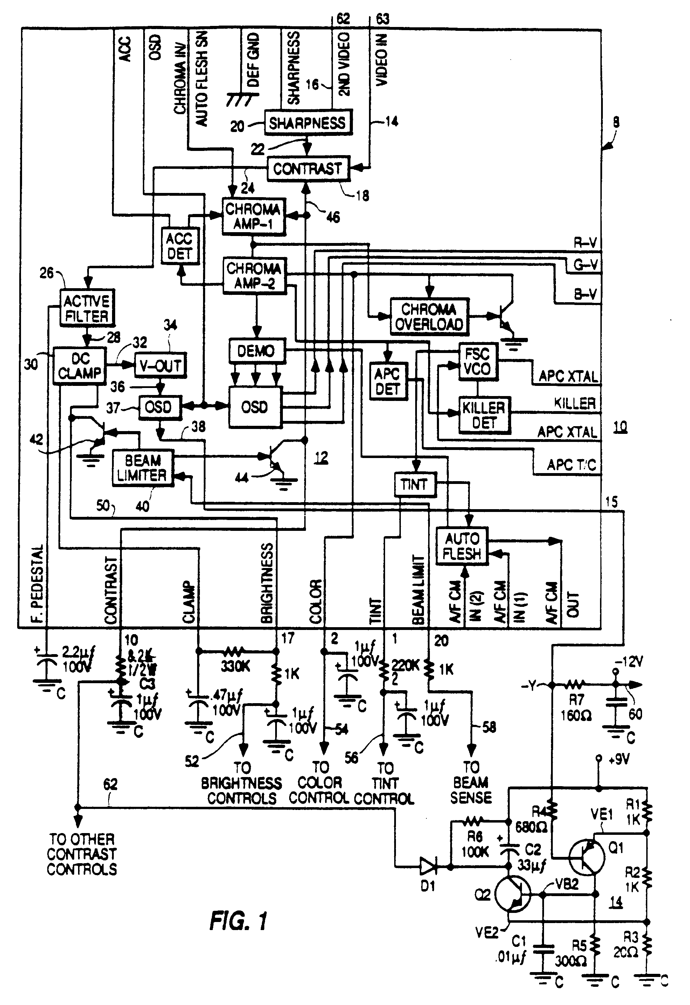

A video control circuit 10 is shown schematically, in part, in FIGURE 1. The video control circuit 10 comprises a video control section 12 of an integrated circuit 8 and an anti-blister circuit 14. Such an integrated circuit, sometimes referred to as a one-chip, has several circuits integrated therein, for example, the video control section, a deflection control section and an IF section. The one-chip 8 illustrated in FIGURE 1 is available as RCA part number 1A51100-01A from Thomson Consumer Electronics, Indianapolis, Indiana. Those portions of the one-chip not pertinent to operation of this invention are omitted for purposes of clarity. A number of input and output pins are shown in FIGURE 1 in order to fully illustrate the video control portion 12, but are also not pertinent to operation of the invention, and are not discussed in detail. The anti-blister circuit 14 has an input coupled to an output of the one-chip 8 on pin 15 thereof and an output on line 62 coupled to an input of the one-chip 8 on pin 10 thereof.

The receiver in which this particular one-chip is used may be capable of displaying two pictures simultaneously, often referred to as pix-in-pix, and may be capable of generating on-screen displays for enabling a viewer to control the receiver. A first video signal received at pin 63 is coupled directly to contrast control 18 on line 14. A second video signal received at pin 62 is indirectly coupled to the contrast control 18, by line 16, sharpness control 20 and line 22. The output of contrast control 18 on line 24 is an input to an active filter 26. The output of active filter 26 on line 28 is one input to DC CLAMP 30. The output of DC CLAMP 30 on line 32 is an input to a Y-OUT circuit 34. The Y-OUT circuit 34 provides a luminance signal Y as an output, which has been derived from the selected one of the first and second video signals. The output of the Y-OUT circuit on line 36 is an input to a first on-screen display OSD control 37. The first on-screen display control 37 provides a luminance signal -Y on line 38, which is the output on pin 15 of the one-chip 8. Pin 15 is tied to a -12 volt supply through resistor R7, which provides a negative magnitude voltage level control signal as an input to the anti-blister circuit 14 at one terminal of resistor R4. The -12 volt voltage supply is provided to other loads on line 60.

One-chip 8 is provided with a number of control circuits responsive to various automatic control circuits and viewer adjustment controls. A BRIGHTNESS control input on pin 17 is coupled by line 52 to other brightness controls, for example, viewer adjustable control elements and automatic beam limiting circuits. A COLOR input on pin 2 is coupled, for example, to a viewer adjustable color control by line 54. A TINT input on pin 1 is coupled, for example, to a viewer adjustable tint control on line 56. A beam limiter 40 has an input on pin 20 which is coupled to a source of beam current sense voltage or current by line 58. Beam limiter 40 controls a transistor switch 42 and a transistor switch 44. Transistor switch 42 can be effective for reducing brightness level and transistor switch 44 can be effective for reducing contrast level. Such beam limiter circuits are generally responsive to average beam current levels, and work in conjunction with other beam limiter circuits, such as anti-blister circuit 14. In this regard, the output of anti-blister circuit 14 on line 62 is an input to a CONTRAST pin 10, as are the outputs of viewer adjustable control elements and automatic contrast control circuits.

The anti-blister circuit 14 comprises a first transistor Q1, a second transistor Q2, a first integrating network formed by capacitor C1 and resistor R5, a second integrating network formed by capacitor C2 and resistor R6 and a biasing network comprising resistors R1, R2 and R3. Resistor R4 is a current limiting resistor coupled between pin 15 of the one-chip 8 and the base of transistor Q1.

The biasing network formed by resistors R1, R2 and R3 determines the turn-on voltage thresholds for transistors Q1 and Q2. When transistors Q1 and Q2 are both turned off, and for the component values shown, the voltage VE1 at the emitter of transistor Q1 is approximately 4.3 volts. The voltage VE2 at the emitter of transistor Q2 is approximately 0.1 volts. The voltage VB2 at the base of transistor Q2 is approximately 0.0 volts. The voltage Vo at the collector of transistor Q2 is approximately 9.0 volts.

The first integrating network formed by resistor R5 and capacitor C1 determines the time constant, and at what size of white area the anti-blister circuit will begin to reduce video drive, by reducing contrast. The time constant of the first integrating network, for the component values shown is approximately 3 microseconds. This corresponds to approximately 5% of the horizontal scanning line, or .05H where H is the horizontal scanning period for each horizontal line.

The second integrating network formed by capacitor C2 and resistor R6 controls the rate at which voltage V₀ can pull down the contrast level and controls the release time of the contrast control circuit by the anti-blister circuit. Resistor R6 is sufficiently large that it can be ignored for purposes of determining the time constant for reducing output voltage V₀. The time constant is approximately 33 microseconds. The time constant for releasing contrast control must take resistor R6 into account, and accordingly, the release time constant is approximately 3.3 seconds, larger by a ratio of approximately 10⁵. The ratio is preferably at least on the order of approximately 10³.

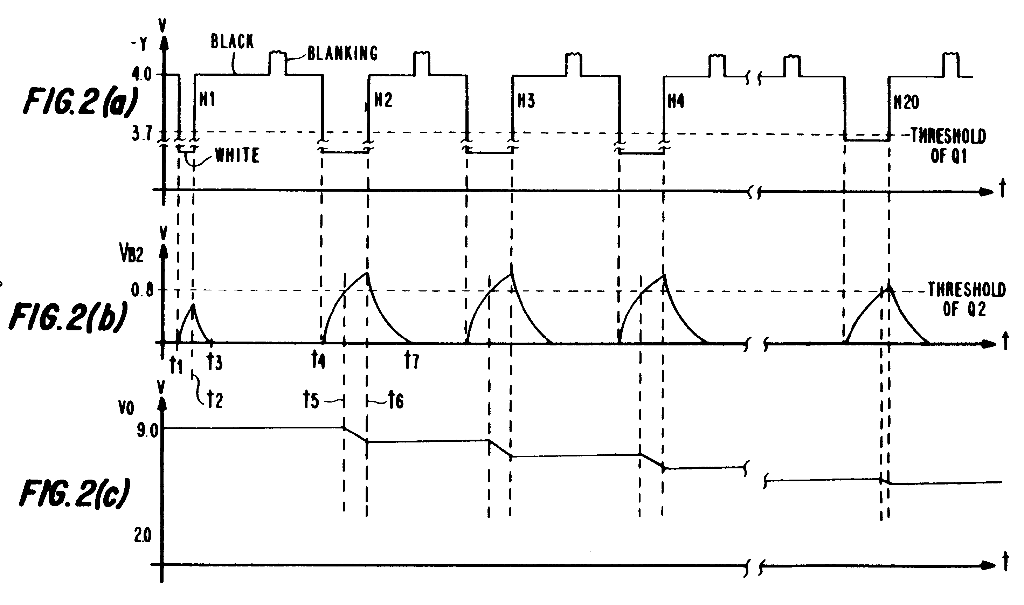

Operation of the anti-blister circuit 14 will be explained in conjunction with FIGURES 2(a), 2(b) and 2(c). These figures are not to scale. FIGURE 2(a) illustrates four successive horizontal scan lines H1, H2, H3 and H4. Scan line H1 is intended to represent a typical waveform for a narrow white bar, whereas waveforms H2, H3 and H4 are intended to illustrate typical waveforms for a wide white bar.

When the -Y luminance signal falls to approximately 3.7 volts, which is approximately one diode drop below the threshold biasing voltage of 4.5 volts, transistor Q1 will turn on and generate a charging current through its collector as a first control signal to the first integrating network of resistor R5 and capacitor C1. The voltage VB2 will begin to rise at time t1 as shown in FIGURE 2(b). Transistor Q2 will not turn on until voltage VB2 is approximately 0.8 volts, that is, apprxoimately one diode drop above the biasing voltage of 0.1 volts at its emitter. As illustrated in FIGURE 2(a), the white bar is sufficiently narrow that by the time the luminance signal no longer exceeds the threshold, at time t2, voltage VB2 has not yet reached the threshold for turning on transistor Q2. Accordingly, the charge on capacitor C1 discharges and voltage VB2 falls back to 0 volts at time t3.

Horizontal scan H2 has a much wider portion exceeding the threshold than did scan H1. Transistor Q1 begins conducting at time t4. Voltage VB2 exceeds the 0.8 volt threshold at time t5, and transistor Q2 conducts until time t6, when the luminance level falls below the threshold. During the interval between time t5 and time t6 transistor Q2 is generating a second charging current, primarily through capacitor C2, which causes a drop in the voltage level of output signal Vo. This drop occurs relatively rapidly. After time t6, the capacitors of both the first and second integrating networks discharge. Capacitor C1 has discharged by time t7. However, in view of the very long time constant of capacitor C2 and resistor R6, output voltage V will have risen very little prior to the next operative cycle of the anti-blister circuit. The very gradual rate at which voltage Vo rises between conduction intervals of transistor Q2 is difficult to illustrate in scale. Each successive horizontal line in which the luminance signal undergoes an excursion beyond the threshold, for the minimum time duration necessary for voltage VB2 to exceed its threshold, the output voltage Vo will fall further and further. The effect on the contrast level is not immediate, as each successive drop in output voltage is not applied directly to the contrast control 18, but instead tends to discharge electrolytic capacitor C3 which is coupled to input pin 10. After a certain number of successive horizontal lines in which the output voltage is pulled successively lower, for example fifteen to twenty lines, the maximum white level will approach the 3.7 volt threshold level as shown by horizontal scan line H20. It can be seen that VB2 rises more slowly during H20 because the white level excursion is closer to the threshold. In other words, capacitor C1 charges more slowly. At the same time, the output voltage Vo will approach an average or equilibrium value and be substantially straight and level, as shown in the right-hand part of FIGURE 2(c) below H20. The equilibrium level for the output voltage Vo will correspond to the level reached when voltage VB2 is just large enough to turn on transistor Q2.

The onset of contrast control responsive to output voltage Vo is effected rather rapidly, notwithstanding the effect of capacitor C3, as the reduction in contrast and brightness (as a consequence of reducing video gain) will not be very noticeable because the portion of the picture is quite bright to begin with. On the other hand, the very long time constant for releasing control of the contrast level enables an equilibrium condition of maximum white level and voltage signal Vo to be reached quite gradually, as the picture will not be so bright and a rapid change of contrast and/or brightness might be quite perceptible. The range of the output voltage Vo is generally between 2 volts and 9 volts, for the illustrated embodiment. Diode D1 prevents the output voltage Vo at the collector of transistsor Q2 from being pulled down by other contrast control voltages which are also coupled to the contrast control line 50, for example, the manual control.

The anti-blister circuit according to the invention will allow normal operation of the receiver when small white areas are displayed, but will reduce video drive when larger white areas are displayed. Other circuits, for example the beam limiter 40, will still operate on white areas which are larger yet, or when overall beam current exceeds a certain threshold. The circuit will respond to horizontal information only, insofar as minimum time duration excursions of the luminance signal beyond the threshold will affect the output voltage Vo, without the need for the condition to necessarily persist for several successive fields. The anti-blister circuit shown, for example, will not attenuate a one inch high vertical bar but will reduce video drive for a three inch high vertical bar.

## Claims

1. Circuit for controlling the beam current of a cathode ray tube, comprising:
first means, including an amplitude comparator (Q1), for developing during each horizontal scanning interval a first signal only when the amplitude of a luminance-related signal exceeds a first threshold corresponding to a given white level threshold;
second means, including an integrating filter (C1, R1) having a time constant significantly less than the duration of a horizontal scanning interval, for developing a second signal in response to each single occurrence of said first signal;
third means, including a second amplitude comparator (Q2), for developing a third signal as a control signal for reducing said beam current only when said second signal exceeds a second threshold;
said beam current reduction control signal being developed for each single amplitude excursion of said luminance-related signal which (1) exceeds said given white level threshold determined by said first threshold and which (2) also persists for a minimum time interval significantly less than a horizontal scanning interval determined by the time constant of said integrating filter and said second threshold.

2. A circuit as recited in Claim 1 further characterized in that:
said third means varies said control signal at a first rate to reduce said beam current and varies said control signal at a second rate to permit an increase in said beam current; and
said second rate is selected to be greater than said first rate.

3. A circuit as recited in Claim 2 further characterized in that:
said second rate is at least three orders of magnitude greater than said first rate.

4. A circuit as recited in Claim 1 further characterized in that:
said input signal applied to said first means comprises a luminance signal derived from a composite video input signal.

5. A circuit as recited in Claim 1 further characterized in that:
said first amplitude comparator of said first means has a first input coupled to receive said luminance-representative signal and a second input coupled to receive a first reference signal corresponding to said given white level threshold for generating a charging current for said integrating filter of said second means as said first signal when the amplitude of said luminance-representative exceeds said first reference signal;
said integrating filter of second means integrates said charging current generated by said first means to generate a voltage as said second signal; and
said second amplitude comparator of said third means has a first input coupled to receive said voltage generated by said second means and a second input coupled to receive a second reference signal for generating said control signal when said voltage exceeds said second reference signal; said third mean including a integrating filter having a relatively fast charging rate when said voltage exceeds said second reference signal and a relatively slow discharging rate when said voltage does not exceeds said second reference signal.

## Patentansprüche

1. Schaltung zum Steuern des Strahlstroms einer Kathodenstrahlröhre, enthaltend:
- ein erstes Mittel, das einen Amplituden-Komparator (Q1) enthält, zum Bilden - während jedes Horizontal-Abtastintervalls - eines ersten Signals nur wenn die Amplitude eines luminanz-bezogenen Signals eine erste Schwelle überschreitet, die mit einer gegebenen Weißpegel-Schwelle korrespondiert;
- ein zweites Mittel, das einen integrierenden Filter (C1, R1) mit einer Zeitkonstante beinhaltet, die signifikant geringer ist als die Dauer eines Horizontal-Abtastintervalls, zur Bildung eines zweiten Signals, ansprechend auf jedes einzelne Auftreten des ersten Signals;
- ein drittes Mittel, das einen zweiten Amplituden-Komparator (Q2) enthält, zum Bilden eines dritten Signals als ein Steuersignal zum Reduzieren des Strahlstroms nur wenn das zweite Signal einen zweiten Schwellenwert überschreitet;
- wobei das Strahlstrom-Reduktions-Steuersignal für jede einzelne Amplitudenabweichung des luminanz-bezogenen Signals gebildet wird, die (1) den gegebenen WeißpegelSchwellenwert überschreitet, der von dem ersten Schwellenwert bestimmt wird, und die (2) auch für ein minimales Zeitintervall andauert, das signifikant geringer als das Horizontal-Abtastintervall ist, das von der Zeitkonstante des integrierenden Filters und dem zweiten Schwellenwert bestimmt wird.

2. Schaltung nach Anspruch 1, dadurch gekennzeichnet, daß das dritte Mittel das Steuersignal mit einer ersten Rate variiert, um den Strahlstrom zu reduzieren, und das Steuersignal mit einer zweiten Rate variiert, um ein Ansteigen des Strahlstroms zu erlauben; und daß die zweite Rate größer als die erste Rate gewählt ist.

3. Schaltung nach Anspruch 2, dadurch gekennzeichnet, daß die zweite Rate zumindest drei Größenordnungen größer als die erste Rate ist.

4. Schaltung nach Anspruch 1, dadurch gekennzeichnet, daß das Eingangssignal, das dem ersten Mittel zugeführt wird, ein Luminanzsignal enthält, das aus einem Composit-Videosignal abgeleitet ist.

5. Schaltung nach Anspruch 1, dadurch gekennzeichnet,
- daß der erste Amplituden-Komparator des ersten Mittels einen ersten Eingang, der zum Erhalt des luminanz-repräsentativen Signals gekoppelt ist, und einen zweiten Eingang aufweist, der zum Erhalt eines ersten Referenzsignals gekoppelt ist, das mit der gegebenen Weißpegel-Schwelle korrespondiert, zur Erzeugung eines Ladestroms für den integrierenden Filter des zweiten Mittels als das erste Signal, wenn die Amplitude des luminanz-repräsentativen (Signals) das erste Referenzsignal überschreitet;
- daß das integrierende Filter des zweiten Mittels den Ladestrom integriert, der von dem ersten Mittel zur Erzeugung einer Spannung als das zweite Signal erzeugt wird; und
- daß der zweite Amplituden-Komparator des dritten Mittels einen ersten Eingang, der zum Erhalt der Spannung gekoppelt ist, die von dem zweiten Mittel erzeugt wird, und einen zweiten Eingang enthält, der zum Erhalt eines zweiten Referenzsignals gekoppelt ist, zur Erzeugung des Steuersignals, wenn die Spannung das zweite Referenzsignal überschreitet; wobei das dritte Mittel einen integrierenden Filter beinhaltet, der eine relativ schnelle Laderate hat, wenn die Spannung das zweite Referenzsignal überschreitet, und eine relativ geringe Entladerate aufweist, wenn die Spannung das zweite Referenzsignal nicht überschreitet.

## Revendications

1. Circuit pour commander le courant de faisceau d'un tube à rayons cathodiques , comprenant :
un premier moyen, comprenant un comparateur d'amplitude (Q1), en vue de développer pendant chaque intervalle de balayage horizontal un premier signal seulement lorsque l'amplitude d'un signal relié à la luminance dépasse un premier seuil correspondant à un seuil de niveau de blanc donné ;
un second moyen, comprenant un filtre d'intégration (C1, R1) ayant une constante de temps inférieure, de façon significative, à la durée d'un intervalle de balayage horizontal, pour développer un second signal en réponse à chaque occurence unique dudit premier signal ;
un troisième moyen, comprenant un second comparateur d'amplitude (Q2) , pour développer un troisième signal comme signal de commande en vue de réduire ledit courant de faisceau seulement lorsque ledit second signal dépasse un second seuil ;
ledit signal de commande de réduction du courant de faisceau étant développé pour chaque extension d'amplitude individuelle dudit signal se rapportant à la luminance qui (1) dépasse ledit seuil donné de niveau de blanc déterminé par ledit premier seuil et qui (2) dure également pendant un intervalle minimal de temps inférieur de façon significative à un intervalle de balayage horizontal déterminé par la constante de temps dudit filtre d'intégration et ledit second seuil.

2. Circuit selon la revendication 1, caractérisé de plus en ce que :
ledit troisième moyen modifie ledit signal de commande à une première vitesse afin de réduire ledit courant de faisceau et modifie ledit signal de commande à une seconde vitesse pour permettre une augmentation dudit courant de faisceau ; et en ce que
ladite seconde vitesse est sélectionnée pour être plus grande que ladite première vitesse.

3. Circuit selon la revendication 2, caractérisé de plus en ce que :
ladite seconde vitesse est au moins de trois ordres de grandeur supérieure à ladite première vitesse.

4. Circuit selon la revendication 1, caractérisé de plus en ce que :
ledit signal d'entrée appliqué audit premier moyen comprend un signal de luminance déduit d'un signal composite d'entrée vidéo.

5. Circuit selon la revendication 1, caractérisé de plus en ce que :
ledit premier comparateur d'amplitude dudit premier moyen possède une première entrée couplée pour recevoir ledit signal représentatif de luminance et une seconde entrée couplée pour recevoir un premier signal de référence correspondant audit seuil dinné de niveau de blanc en vue de générer un courant de charge pour ledit filtre d'intégration dudit second moyen comme dit premier signal lorsque l'amplitude dudit signal représentatif de luminance dépasse ledit premier signal de référence ;
ledit filtre d'intégration du second moyen intègre ledit courant de charge généré par ledit premier moyen pour générer une tension comme dit second signal ; et
ledit second comparateur d'amplitude dudit troisième moyen comporte une première entrée couplée pour recevoir ladite tension générée par ledit second moyen et une seconde entrée couplée pour recevoir un second signal de référence en vue de générer ledit signal de commande lorsque ladite tension dépasse ledit second signal de référence ; ledit troisième moyen incluant un filtre d'intégration possédant une vitesse de charge relativement rapide lorsque ladite tension dépasse ledit second signal de référence et une vitesse de décharge relativement lente lorsque ladite tension ne dépasse pas ledit second signal de référence.
